(19) Europäisches Patentamt
European Patent Office
Office européen des brevets

(11) Veröffentlichungsnummer: **0 360 129 B1**

(12) **EUROPÄISCHE PATENTSCHRIFT**

(45) Veröffentlichungstag der Patentschrift: **09.11.94**

(51) Int. Cl.5: **C08L 77/00**, C08L 55/02

(21) Anmeldenummer: **89116824.7**

(22) Anmeldetag: **12.09.89**

(54) **Formmassen aus Polyamiden und tert.-Butylacrylathaltigen Pfropfpolymerisaten.**

(30) Priorität: **23.09.88 DE 3832397**

(43) Veröffentlichungstag der Anmeldung:
**28.03.90 Patentblatt 90/13**

(45) Bekanntmachung des Hinweises auf die Patenterteilung:
**09.11.94 Patentblatt 94/45**

(84) Benannte Vertragsstaaten:
**AT BE CH DE ES FR GB IT LI NL**

(56) Entgegenhaltungen:
**EP-A- 0 218 063**
**EP-A- 0 223 005**
**EP-A- 0 248 255**
**DE-A- 2 941 025**

(73) Patentinhaber: **BAYER AG**

**D-51368 Leverkusen (DE)**

(72) Erfinder: **Westeppe, Uwe, Dr.**
**Vogelskamp 72**
**D-4020 Mettmann (DE)**
Erfinder: **Piejko, Karl-Erwin, Dr.**
**Unterscheider Weg 7 a**
**D-5060 Bergisch-Gladbach 2 (DE)**
Erfinder: **Müller, Rolf-Peter, Dr.**
**Paul-Klee-Strasse 76**
**D-5090 Leverkusen 1 (DE)**
Erfinder: **Fengler, Gerd, Dr.**
**Bethelstrasse 16**
**D-4150 Krefeld (DE)**
Erfinder: **Lindner, Christian, Dr.**
**Im Wasserblech 11**
**D-5000 Köln 91 (DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue thermoplastische Formmassen aus Polyamiden, Pfropfpolymerisaten, die in der Hülle einen Ester der (Meth)acrylsäure mit tert. $C_4$-$C_{10}$- Alkoholen enthalten sowie gegebenenfalls zusätzlich Kautschukpolymerisaten als Schlagzäh-Modifikatoren.

EP-A-0 218 063 beschreibt Mischungen von Polyamid mit Pfropfpolymerisat.

EP-A-0 248 255 beschreibt thermoplastische Formmassen aus 55-99 Gew% Polyamid und 45- 1 Gew% Pfropfpolymerisat.

EP-A-0 223 005 beschreibt Polyamid formmassen aus aus 35-99 Gew% Polyamid und 1-65 Gew% Pfropfprodukt aus a) 65-85 Gew% Kautschukgrundlage und b) 35-15 Gew% aufgepfropftes Vinylmonomerpolymerisat.

Aus der DE-A-1 669 702 sind PA-Formmassen mit 1 - 40 Gew.-% Copolymerisaten aus Olefinen und (Meth)acrylsäureestern eines tertiären Alkohols bekannt; sie weisen verbesserte Schlagzähigkeiten auf. Das Zähigkeitsniveau ist jedoch für viele Anwendungen unzureichend.

Aus der DE-A-2 403 889 geht hervor, daß Mischungen aus amorphen Polyamiden und schlagzähmodifizierten Styrolcopolymerisaten mit Acrylsäurederivaten gute mechanische Eigenschaften aufweisen. Bevorzugte Acrylsäurederivate sind Acrylnitril sowie Ester primärer und sekundärer Alkohole.

DE-A-2 941 025 lehrt, daß sich die Zähigkeit von Polyamiden insbesondere durch Mischung mit Pfropfkautschuken auf Basis Polybutadien, die eine Hülle aus Acrylsäureestern primärer und sekundärer Alkohole und zusätzlich (Meth-)acrylsäure-t-butylester enthalten, erheblich verbessern läßt.

EP-A 0 049 103 beschreibt Polymermischungen aus einem Polyamid und Vinylcopolymerisaten, die Ester und ein Imid einer $\alpha,\omega$-ungesättigten Dicarbonsäure enthalten und u. a. hohe Dimensionstabilität, Chemikalienbeständigkeit, Hitze- und Abriebebeständigkeit aufweisen.

Aus der EP-A 0 232 878 sind Formmassen aus Polyamiden, Pfropfmischpolymerisaten und Olefincopolymeren, die einen hohen Anteil an sauren Gruppen aufweisen, bekannt. Die Schlagzähigkeit wird verbessert.

J 62/149 749 lehrt, daß PA-Blends aus Polystyrol, anorg. Füllstoff und einem Pfropfpolymerisat aus Styrol/Elastomercopolymer, gepfropft mit Säureanhydriden, -amiden, -imiden, -estern, Epoxy- oder Hydroxylgruppen gute Oberflächen aufweisen.

J 62/185 724 beschreibt Mischungen aus Polyamid und Styrolpolymeren, die mit Epoxy-, Carboxyl- oder Aminoresten modifiziert wurden.

Aus US 4 740 552 geht hervor, daß in einem Polyamid/Styrolcopolymer-Blend zur Verträglichkeitsvermittlung zwischen den Komponenten eine Pfropfung mit 0,05-5 Tle. eines ungesättigten Carbonsäureanhydrids notwendig ist, um Delaminierung zu verhindern.

Die aus dem Stand der Technik bekannten Varianten sind komplexe Vielkomponentensysteme. Die beschriebenen Eigenschaften sind jedoch nicht ausreichend für hochwertige technische Anwendungen, wo ein ausgewogenes Eigenschaftsbild bezüglich Wärmeformbeständigkeit, Zähigkeit (insbesondere Fließnahtfestigkeit) und Festigkeit gefordert wird.

Überraschenderweise wurde nun gefunden, daß sich Formmassen aus Polyamiden und Pfropfpolymerisaten, die in der Hülle einen Ester der (Meth)acrylsäure mit tert. $C_4$-$C_{10}$- Alkoholen enthalten, herstellen lassen, die sich durch gute Zähigkeit, hohe Fließnahtfestigkeit und glatte Oberflächen auszeichnen. Ferner weisen die Formmassen eine gute Temperatur-Modul-Charakteristik auf.

Gegenstand der Erfindung sind somit thermoplastische Formmassen enthaltend

A) 35 - 97 Gew.-% eines thermoplastischen Polyamids A)

B) 3 - 65 Gew.-% eines Pfropfpolymerisates B) mit einer Pfropfhülle B 1) aus

B 1.1) Wenigstens einem Monomer aus der Reihe der Styrole, $\alpha$-Methylstyrole, Acrylnitril

und

B 1.2) Wenigstens einem Ester der (Meth)acrylsäure mit tert. C4-C10-Alkoholen in Mengen 1 bis 12 Gew.-% in der Pfropfhülle B 1)

gepfropft auf eine teilchenförmige Kautschukgrundlage B 2) mit einer Glastemperatur $< 0°$ C.

wobei das Pfropfpolymerisat B) einen Kautschukgehalt von 5 bis 60 Gew.-% besitzt

und

C) 0 - 45 Gew.-% eines Kautschukpolymerisates als Schlagzähmodifikator mit einem Kautschukgehalt $\geqq$ 55 Gew.-%, mit der Maßgabe, daß der Kautschukanteil der Komponente C mindestens 10 Gew.-% höher als der Kautschukanteil der Komponente B) liegt.

Polyamide A

Als Polyamid-Komponente A) der erfindungsgemäßen Formmassen eignen sich alle teilkristallinen Polyamide, insbesondere Polyamid-6, Polyamid-6,6 und teilkristalline Copolyamide auf Basis dieser beiden Komponenten. Weiterhin kommen teilkristalline Polyamide in Betracht, deren Säurekomponente insbesondere ganz oder teilweise (neben Adipinsäure bzw. Caprolactam) aus Terephthalsäure und/oder Isophthalsäure und/oder Korksäure und/oder Sebacinsäure und/oder Azelainsäure und/oder Dodecandicarbonsäure und/oder Adipinsäure und/oder einer Cyclohexandicarbonsäure besteht, und deren Diaminkomponente ganz oder teilweise insbesondere aus m- und/oder p-Xylylendiamin und/oder Tetramethylendiamin und/oder Hexamethylendiamin und/oder 2,2,4-und/oder 2,4,4-Trimethylhexamethylendiamin und/oder Isophorondiamin besteht, und deren Zusammensetzungen aus dem Stand der Technik bekannt ist.

Außerdem sind teilkristalline Polyamide zu nennen, die ganz oder teilweise aus Lactamen mit 6 bis 12 C-Atomen, gegebenenfalls unter Mitverwendung einer oder mehrerer der obengenannten Ausgangskomponenten, hergestellt werden.

Besonders bevorzugte teilkristalline Polyamide A) sind Polyamid-6 und Polyamid-6,6 oder Copolyamide mit nur geringen Anteilen (bis etwa 10 Gew.-%) der Cokomponenten. Es können als Polyamidkomponente A) auch amorphe Polyamide eingesetzt werden. Sie werden erhalten durch Polykondensation von Diaminen, beispielsweise Ethylendiamin, Tetramethylendiamin, Hexymethylendiamin, Decamethylendiamin, 2,2,4- und/oder 2,4,4-Trimethylhexamethylendiamin, m- und/oder p-Xylylendiamin, Bis-(4-aminocyclohexyl)-methan, oder Geschen aus 4,4'- oder 2,2'-Diaminodicyclohexylmethanen, 2,2-Bis-(4-aminocyclohexyl)-propan, 3,3'-Dimethyl-4,4'-diamino-dicyclohexylmethan, 3-Aminoethyl-3,5,5-trimethyl-cyclohexylamin, 2,5- und/oder 2,6-Bis-(aminomethyl)-norbornan und/oder 1,4-Diamino-methylcyclohexan, mit Dicarbonsäuren, beispielsweise Oxalsäure, Adipinsäure, Azelainsäure, Decandicarbonsäure, Heptadecandicarbonsäure, 2,2,4- und/oder 2,4,4-Trimethyladipinsäure Isophthalsäure oder geringen Mengen an Terephthalsäure. Selbstverständlich sind auch amorphe Copolymere, die durch Polykondensation mehrerer Monomere erhalten werden, geeignet, ferner solche Copolymere, die unter Zusatz von Aminocarbonsäuren wie ω-Aminocapronsäure, ω-Aminoundecansäure oder ω-Aminolaurinsäure oder ihren Lactamen, hergestellt werden.

Besonders geeignete amorphe Polyamide sind die Polyamide, hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornan; oder aus Isophthalsäure, 4,4'-Diamino-di-cyclohexylmethan und ω-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus

70 bis 99 Mol.-% des 4,4'-Diaminoisomeren
1 bis 30 Mol.-% des 2,4'-Diaminoisomeren
0 bis 2 Mol.-% des 2,2'-Diaminoisomeren

und gegebenenfalls entsprechend höherkondensierten Diaminen, die durch Hydrierung von Diaminodiphenylmethan technischer Qualität erhalten werden.

Die Polyamide A) können auch aus Mischungen oder aus einem Copolyamid, bestehend aus wiederkehrenden Einheiten, die sich von der Adipinsäure und Hexamethylendiamin ableiten und Einheiten, die sich von ε-Caprolactam ableiten und Polyhexamethylenadipinsäureamid wie in DE-OS 3 735 404 beschrieben oder von teilkristallinen und amorphen Polyamiden bestehen, wobei vorzugsweise der amorphe Polyamidanteil unter dem teilkristallinen Polyamidanteil liegt.

Bevorzugt sind teilkristalline Polyamide auf Basis Polyamid-6, Polyamid-66 und teilkristalline Polyamide auf Basis dieser Hauptkomponenten unter Zusatz von Cokomponenten der erwähnten Art.

Pfropfpolymerisate B

Pfropfpolymerisate B im Sinne der Erfindung sind Pfropfpolymerisate mit Pfropfhüllen B 1) aus

B 1.1) wenigstens einem Monomer aus der Reihe der Styrole, der α-Methylstyrole, Acrynitril, Methacrylnitril, der Vinyl-C1 -C4-Carbonsäuren, Ester der (Meth)acrylsäure mit primären und sekundären C1-C10-Alkoholen, wobei Styrole oder α-Methylstyrole in Kombination mit Acrylnitril bevorzugt sind,

und

B 1.2) wenigstens einem Ester der (Meth)acrylsäure mit tert.-C4-C10-Alkoholen, in Mengen bis zu 15 Gew.-% in der Pfropfhülle B 1),

gepfropft auf eine teilchenförmige Kautschukgrundlage B 2) mit Glastemperaturen $< 0\,^\circ C$, insbesondere <

-20 °C, wobei die Pfropfpolymerisate B) Kautschukanteile von 5-60 Gew.-%, bevorzugt 10-50 Gew.-%, insbesondere 15-34 Gew.-% aufweisen.

Bevorzugte Monomere B 1.1) als Monomerbausteine der Pfropfhülle B 1) sind Styrol, α-Methylstyrol einerseits und als weitere Monomere Acrylnitril, Methylmethacrylat, n-Butylacrylat, Cyclohexylmethacrylat und Vinylacetat; besonders bevorzugt sind Styrol, α-Methylstyrol und Acrylnitril. Die Styrole und α-Methylstyrole können dabei am aromatischen Ring alkyl-, halogenalkyl- oder halogensubstituiert sein, z. B. durch C1-C3-Alkyl-, halogenhaltige (C1-C3)-Alkyl- und/oder Halogengruppen, bevorzugt jedoch sind Styrol und α-Methylstyrol.

Monomere B 1.2) im Sinne der Erfindung sind tertiäre (Meth)acrylsäureester und besitzen die allgemeine Formel

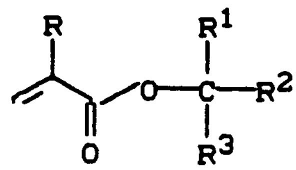

mit R = H, $CH_3$ und

$R_1$, $R_2$, $R_3$ = Alkyl, so daß die Summe der C-Atome in $R_1$, $R_2$ und $R_3$ 3 - 9 beträgt.

Besonders bevorzugte Monomere B 1.2) sind tert.-Butylacrylat, tert.-Butylmethacrylat, tert.-Pentylmethacrylat und tert.-Hexylacrylat, sowie gegebenenfalls tert.-Octyl(meth)acrylat.

Die Pfropfhülle B 1) enthält bis zu 15 Gew.-%, bevorzugt 1-12 Gew.-%, insbesondere 3-10 Gew.-% der Monomere B 1.2).

Die teilchenförmige Kautschukgrundlage B 2) ist ein radikalisch hergestelltes Emulsionspolymerisat aus wenigstens teilvernetzten Dien- oder Alkylacrylatkautschuken mit mittleren Teilchendurchmessern ($d_{50}$-Wert) von 80-600 nm, bevorzugt 100 - 400 nm.

Dienkautschuke sind z. B. Polybutadien, Polyisopren und Copolymerisate von Butadien mit bis zu 35 Gew.-% Comonomeren wie Styrol, Acrylnitril, Methylmethacrylat, C1-C6-Alkylacrylat. Acrylatkautschuke sind z. B. vernetzte teilchenförmige Emulsionspolymerisate aus C1-C6-Alkylacrylaten, insbesondere C2-C6-Alkylacrylaten, gegebenenfalls in Mischung mit bis zu 15 Gew.-% Comonomeren wie Styrol, Methylmethacrylat, Butadien, Vinylmethylether, Acrylnitril und wenigstens einem polyfunktionellen vernetzenden Comonomer, z B. Divinylbenzol, Glykol-bisacrylate, Bisacrylamide, Phosphorsäuretriallylester, Allylester der (Meth)acrylsäure, Triallylisocyanurat, wobei die Acrylatkautschuke bis zu 4 Gew.-% der vernetzenden Comonomere enthalten können. Solche Kautschukgrundlagen sind bekannt. Besonders geeignete Acrylat-Kautschukgrundlagen besitzen eine Kern-Mantel-Struktur, insbesondere einen Kernanteil von 0,5-10, vorzugsweise 2-4 Gew.-%.

Die Kautschukgrundlage B 2) besitzt Gelgehalte (als Maß für die Vernetzung) von größer 60 Gew.-%, vorzugsweise > 75 Gew.-%. Die Gelgehalte werden nach M. Hoffmann et. al., Polymeranalytik I und II, Georg Thieme-Verlag, Stuttgart (1977) bestimmt.

Die Herstellung der erfindungsgemäßen Pfropfpolymerisate B) erfolgt nach bekannten Methoden durch wäßrige Emulsionspolymerisation mit radikalbildenden Initiatoren bei Temperaturen zwischen 50 und 90 °C. Geeignete Initiatoren sind beispielsweise Persulfat, Perphosphat, Hydroperoxide oder Azoverbindungen. Bevorzugt sind anorganische, wasserlösliche Initiatoren. Die Pfropfpolymerisation auf die bekannten Kautschuke erfolgt vorteilhaft unter Mitverwendung anionischer Emulgatoren vom Typ der Carbonsäuresalze, z. B. Salze der Ölsäure, Stearinsäure, Harzsäuren, Abietinsäure sowie deren disproportionierte Derivate.

Kautschukpolymerisate C

Gegebenenfalls als weitere Komponente können die erfindungsgemäßen Formmassen als Komponente C) ein die Schlagzähigkeit der Formmassen weiter erhöhendes Kautschukpolymerisat enthalten.

Bevorzugte Formmassen enthalten bis zu 45, vorzugsweise 5-35, insbesondere 5 bis 25 Gew.-% der Komponente C), bezogen auf die Summe A) + B) + C). Die Komponente C) stellt ein Kautschukpolymerisat dar und enthält oder ist ein Kautschukpolymerisat mit Einfriertemperaturen (Glastemperaturen) kleiner 0 °C, insbesondere kleiner -20 °C. Es kann aus der Reihe der Homo-, Co- oder Pfropfpolymerisate auf der Basis von Dienmonomer-, Olefin- oder Acrylatkautschuken ausgewählt werden, die unvernetzt, insbesondere teilvernetzt oder hochvernetzt sein können. Die Komponente C) ist aus den an sich bekannten

Kautschukpolymerisaten auszuwählen, die zur Verbesserung der Eigenschaften, insbesondere zur Schlagzähverbesserung von thermoplastischen Polyamiden üblicherweise verwendet werden. Der Kautschukgehalt der Komponenten C) soll ≧55 Gew.-%, insbesondere ≧70 Gew.-% betragen; dies gilt vor allem für Komponenten C) aus der Reihe der Pfropfpolymerisate.

Typische Vertreter der Komponente C) sind z. B. Olefinkautschuke, beispielsweise Dienkautschuke sowie auch Ethylen-Propylen-Copolymerisate, die gegebenenfalls noch geringe Mengen unkonjugierter Dienmonomere eingebaut enthalten können (sogenannte EPDM-Kautschuke), sowie vor allem Dienmonomer/Acrylnitril/Copolymerkautschuke, Dienpolymer/Vinylarylpolymer-Blockcopolymere wie Styrol/Butadien-Blockcopolymere.

Weiterhin geeignete Komponenten C) können Olefinkautschuke mit sauren Gruppen sein. Vorteilhaft kann besonders jedoch der Einsazt von Carboxylgruppen enthaltenden Terpolymerisaten aus Ethylen, (Meth)acrylsäure sowie Butylacrylat sein.

Erfindungsgemäß als Komponente C) geeignet können auch kautschukartige Copolymerisate aus Ethylen-Vinylacetat- und Ethylen-(Meth)acrylsäurealkylester-Copolymeren sein. Geeignet als Komponente C) sind auch die in der GB PS 1 284 489 beschriebenen Ethylencopolymere mit Aminoacrylatmonomeren. Weiterhin lassen sich auch Copolymere aus Olefinen, Acrylaten und säurefunktionellen Monomeren wie z. B. (Meth)acrylsäure oder Maleinsäureanhydrid verwenden.

Besonders geeignete Komponenten C) im Sinne der Erfindung sind kautschukartige Pfropfpolymerisate, beispielsweise Pfropfpolymerisate aus $\alpha$-Olefin-Polymerisaten und Carbonsäure- und/oder Ester-Pfropfmonomeren, wobei als Pfropfgrundlagen Copolymere oder Homopolymere aus Ethylen, Propylen und Buten-(1) geeignet sind.

Geeignete Pfropfpolymerisate sind auch die aus den Patentanmeldungen DE-A 2 622 876, EP-A 13 941, DE-A 2 622 973, DE-A 2 401 149 und EP-A 9757 bekannten Poly-$\alpha$-olefinkautschuk-Maleinsäureanhydrid-Addukte, die gemäß DE-A 3 335 706 bekannten Umsetzungsprodukte aus Ethylen-Copolymeren mit Maleinsäureanhydrid und Dialkylestern der Malein- bzw. Fumarsäure, die gemäß FR-PS 1 568 637 mit ungesättigten Säuren gepfropften Polyolefinkautschuke (GB-PS 998 439), sowie die z. B. in der DE-A 2 622 973 beschriebenen Maleinsäure-gepfropften EPDM-Kautschuke.

Vorteilhaft geeignet sind insbesondere Pfropfpolymerisate, die durch Aufpfropfen von Styrolmonomeren und Acrylnitril auf ein Kautschukpolymerisat, dessen Glastemperatur unter 0 °C, vorzugsweise unter -20 °C, liegt, entstehen; Kautschukpolymerisate sind dann beispielsweise Polybutadien, Butadien-Acrylester-Copolymere z. B. auf der Basis von Acrylsäurebutyl- und/oder -ethylhexylester, Polyacrylsäurealkylester, insbesondere solche mit 1 bis 8 Kohlenstoffatomen im Alkylrest, Copolymere aus Butadien, Acrylsäurealkylestern und Vinylalkylethern, Copolymere aus Ethylen, Propylen und einer Dienkomponente. Die Herstellung derartiger kautschukmodifizierter Copolymerisate ist bekannt (z. B. aus JA 48 850 oder US-PS 4 217 424.

Als Komponente C) sind auch die gemäß DE-A 2 906 222 bekannten Pfropfpolymerisate aus Styrol und Acrylnitril auf Polybutadien oder Copolymerisaten aus Butadien und $\alpha,\beta$-ungesättigten Monomeren, wie beispielsweise Styrol, Acrylnitril, niedere Alkylester oder Acryl- oder Methacrylsäure, sowie die bekannten bepfropften Acrylatkautschuke geeignet.

Vorteilhaft geeignet sind auch die z. B. in der DE-A 3 200 070 beschriebenen mehrphasigen Polymere aus einem stark vernetzten Dienkautschuk als Kern, mit einer ersten Hülle aus vernetztem Acrylatkautschuk (Kautschuk mit Kern/Mantelstruktur) und einer zwieten Hülle aus einem Polymerisat oder Copolymerisat aus harzbildenden Monomeren aus der Reihe Styrol, Acrylnitril, Methacrylnitril, Methacrylsäureester oder Mischungen daraus.

Geeignet sind auch die in EP-A 0 134 937 beschriebenen gepfropften, partiell vernetzten Dien- und/oder Acrylatkautschuke, sowie die gemäß DE-A 2 758 615 aus einem vernetzten Kautschuk als Pfropfgrundlage hergestellten Pfropfprodukte. Bevorzugt werden dabei Kautschuke auf Basis Polybutadien und/oder Polyisopren, die bis zu 40, vorzugsweise bis zu 10 Gew.-% Styrol und/oder Acrylnitril und/oder Ester der Acrylsäure als Comonomer enthalten können. Mögliche Pfropfmonomere können sein: Acrylnitril, Methacrylnitril, aliphatische Ester und Amide der Acrylsäure und Methacrylsäure mit bis zu 22 C-Atomen.

Besonders hochwertige erfindungsgemäße Formmassen erhält man, wenn als Komponente C) Pfropfpolymerisate mit teilchenförmiger Struktur und partieller Vernetzung verwendet werden. Vorteilhafte Teilchengrößen ($d_{50}$-Werte) liegen im Bereich von 0,05 bis 2 $\mu$m, besonders 0,08 bis 0,6 $\mu$m, insbesondere von 0,15 bis 0,5 $\mu$m. Die zur Herstellung solcher Pfropfpolymerisate eingesetzten Kautschuke sind ebenfalls teilchenförmig, wenigstens teilvernetzt und besitzen Gelgehalte (als Maß für den Vernetzungsgrad) von größer 30 Gew.-%, vorzugsweise größer 70 Gew.-%.

Solche Pfropfpolymerisate enthalten Kautschukgehalte im Bereich 55-85 Gew.-%, bevorzugt 70-80 Gew.-%, und enthalten Kautschuke aus der Reihe der Dienkautschuke (Butadien, Isopren) sowie deren Copolymere mit Styrol, Acrylnitril, Alkyl(meth)acrylat, Vinylether, oder der Alkylacrylatkautschuke ($C_1$-$C_8$-

Alkyl-Acrylat) sowie deren Copolymere mit Dienmonomeren, Styrol, Acrylnitril, Alkylmethacrylat, Vinylester, Vinylether. Alkylacrylatkautschuke enthalten üblicherweise geringe Mengen polyfunktioneller Comonomere, die eine Vernetzung der Acrylatkautschuke bewirken, beispielsweise Divinylbenzol, Diol-bis-(Meth)-acrylate, Bis-Acrylamide, Acrylamid-Methylolderivate, Trivinylbenzol, Triallylcyanurat, Triallylisocyanurat. Solche Kautschukgrundlagen sind bekannt. Besonders geeignete Acrylat-Kautschukgrundlagen besitzen eine Kern-Mantel-Struktur, insbesondere einen Dienkautschukkern mit einem Kernanteil von 0,5 bis 10, vorzugsweise 2 bis 4 Gew.-%.

Die bevorzugt geeigneten, auf die Kautschukgrundlagen aufgepfropften Monomere sind Alkylmethacrylat, Styrol, Acrylnitril, Alkylacrylat. Acrylamide, insbesondere Methylmethacrylat sowie Kombinationen aus Methylmethacrylat und Alkylacrylaten oder Styrol in Kombination mit Acrylnitril.

Besonders gut geeignete, bevorzugt eingesetzte Pfropfpolymerisate vom Typ C) enthalten Kautschukgehalte ≥55 Gew.-%, enthalten Kautschuk mit Gelgehalten größer 70 Gew.-%, besitzen Teilchengrößen von 0,15 bis 0,5 µm, enthalten Polybutadienkautschuk oder Polybutylacrylatkautschuk sowie entsprechende Kern/Mantel-Kautschuke (nach DE-A 3 200 070) und besitzen als Pfropfmonomere Methylmethacrylat, insbesondere in Kombination mit n-Alkylacrylat, oder Styrol-Acrylnitrilmischungen mit Acrylnitrilgehalten zwischen 5-40 Gew.-%. Diese Pfropfpolymerisate lassen sich durchweg durch Emulsionspfropfpolymerisation nach bekannten Methoden herstellen.

Harzkomponente D

Als weitere Komponente können die erfindungsgemäßen Formmassen gegebenenfalls harzartige Polymerisate bzw. Copolymerisate enthalten aus Styrolen, α-Methylstyrolen, (Meth)acrylnitril, Estern der (Meth)-acrylsäure, Vinyl-C1-C4-carbonsäuren bzw. Mischungen aus diesen Monomeren, mit Grenzviskositäten (Staudinger-Indices) [η] zwischen 0,3 und 1,5 dl/g (in Toluol bei 23°C gemessen). Bevorzugt sind Copolymere aus Styrol oder α-Methylstyrol mit Acrylnitril, die gegebenenfalls bis zu 40 Gew.-% Ester der (Meth)Acrylsäure, insbesondere Methylmethacrylat oder n-Butylacrylat enthalten können. Die Styrolderivate sind dabei in Anteilen zwischen 100 und 10 Gew.-%, bevorzugt 90-20 Gew.-%, besonders bevorzugt 80-30 Gew.-% enthalten. Die Harzkomponente D enthält keine tertiären Ester der (Meth)Acrylsäure und keine Comonomere mit reaktiven Gruppen wie Carboxyl-, Epoxid- oder Anhydrid-. Die Vinylpolymerisate D werden nach üblichen Verfahren wie radikalische Polymerisation in Masse, Lösung, Suspension oder Emulsion, bevorzugt aber durch radikalische Emulsionspolymerisation in Wasser erhalten. Die Komponente D) ist gegebenenfalls in den erfindungsgemäßen Formmassen in Anteilen bis zu 25 Gew.-% bezogen auf die Summe der Komponenten A + B + C enthalten, bevorzugt in Anteilen kleiner 20 Gew.-%.

Die Aufarbeitung der als wäßrige Emulsion anfallenden Komponenten B, gegebenenfalls C und gegebenenfalls D zu einem Pulver, kann getrennt oder gemeinsam nach Vermischen der Latices durch Koagulation erfolgen. Bei diesem Verfahren wird bevorzugt der zu koagulierende Latex bzw. Latexmischung auf pH-Werte zwischen 7 und 12, insbesondere 8-11 eingestellt, wenn die Latexmischung nicht bereits einen entsprechen pH-Wert besitzt. Die Koagulation erfolgt bevorzugt mit wäßrigen Salzlösungen, die pH-Werte ≧ 5, insbesondere ≧ 7 aufweisen.

Um ein ausgewogenes Eigenschaftsbild der erfindungsgemäßen Formmassen zu erhalten, müssen die Komponenten A), B) und gegebenenfalls C), D) in ihren Mengenanteilen und B), C) in ihrer Zusammensetzung (z.B. Kautschukgehalt) aufeinanderabgestimmt werden. Werden beispielsweise Eigenschaften wie geringe Wasseraufnahme bei hoher Zähigkeit und Fließnahtfestigkeit gefordert, so ist bevorzugt, daß der Polyamidanteil A) unter 70 Gew.-% liegt bei einem Gesamtkautschukgehalt (Kautschukanteil der Komponenten B) und gegebenenfalls C), bezogen auf die gesamte Formmasse) zwischen 10 und 25 Gew.-%, insbesondere zwischen 12 und 20 Gew.-%. Die Differenz zu 100 % besteht dabei aus den Nichtkautschukanteilen der Komponenten B), gegebenenfalls C) bzw. aus einer zusätzlich zugesetzten Harzkomponente D). Aus dieser Betrachtung geht weiterhin hervor, daß, wenn B) in kleinen Anteilen (zwischen 3 und 15 Gew.-%) in den erfindungsgemäßen Formmassen enthalten ist, die Komponente C) in solchen Mengen enthalten ist, daß entsprechend den Kautschukanteilen von B) und C) der Gesamtkautschukgehalt in den angegebenen Grenzen liegt.

Die Polyamide A) sollen bevorzugt eine relative Viskosität (gemessen in einer 1 gew.-%igen Lösung in m-Kresol bei 25°C) von 2,0 bis 5,0, bevorzugt von 2,5 bis 4,0 aufweisen.

Auch übliche Additive, wie Gleit- und Entformungsmittel, Nukleierungsmittel, Stabilisatoren, Füll- und Verstärkungsstoffe, Flammschutzmittel, Farbstoffe sowie Thermostabilisatoren, Antioxidantien und/oder Lichtschutzmittel können den erfindungsgemäßen Formmassen zugesetzt werden.

Die Herstellung der erfindungsgemäßen Formmassen kann durch Vermischen der Komponenten in üblichen Mischaggregaten, wie Walzen, Knetern, Ein- oder Mehrwellenextrudern, erfolgen.

Wenn auch in den meisten Fällen sämtliche Komponenten zweckmäßigerweise in einem Schritt gemischt werden, kann es manchmal auch empfehlenswert sein, zuerst eine oder zwei Komponenten wegzulassen und erst zu einem späteren Zeitpunkt zuzumischen. So können die erfindungsgemäßen Formmassen hergestellt werden, indem die Komponenten A) und C) gemeinsam aufgeschmolzen und homogenisiert werden, bevor das Pfropfpolymerisat B) und gegebenenfalls zusätzlich der Thermoplast D) in die Schmelze eingearbeitet werden.

Die Temperatur bei der Herstellung der Mischungen sollte mindestens 10 °C und zweckmäßig höchstens 80 °C oberhalb des Schmelzpunktes, bzw. Erweichungspunktes bei nichtkristallinen Materialien, der Komponente mit der höchsten Schmelz- bzw. Erweichungstemperatur liegen. Entsprechend dem Eigenschaftsbild eignen sich die erfindungsgemäßen Formmassen überall im Spritzguß- und Extrusionssektor dort, wo die beschriebenen Eigenschaften gefordert werden, wie z. B. im Kfz-Bereich (Stoßfänger), in der Elektrotechnik oder im Maschinenbau.

Verwendete Komponenten:

A) Polyamid 6 mit einer relativen Viskosität (gemessen an einer 1 gew.-%igen Lösung in m-Kresol bei 25 °C) von 3,0

B) t-Butylacrylathaltige Pfropfpolymerisate

B 1) In einem Reaktor werden vorgelegt: 1940 g Wasser und 1688 g eines Polybutadienkautschuklatex mit einem Feststoffgehalt von 48 Gew.-% und einem mittleren Teilchendurchmesser ($d_{50}$) von 385 nm. Es wird 15 min. mit Stickstoff gespült. Nach Aufheizen auf 65 °C wird unter leichtem Stickstoffstrom eine Lösung aus 8 g Kaliumperoxodisulfat in 200 g Wasser zugegeben. Danach werden folgende Lösungen gleichzeitig innerhalb von 6 Stunden in den Reaktor eingespeist:

| | |
|---|---|
| Lösung 1: | 1313 g Styrol |
| | 511 g Acrylnitril |
| | 66,2 g tert.-Butylacrylat |
| Lösung 2: | 40 g disproportionierte Abietinsäure-Na-Salz |
| | 34 g 1n Natronlage |
| | 2200 g Wasser |

Man läßt vier Stunden bei 65 °C auspolymerisieren, fügt 1 Gew.-% (bezogen auf den Feststoff) eines phenolischen Stabilisators zu und koaguliert den Latex (pH-Wert 10) mit einer wäßrigen Magnesiumsulfatlösung. Das Koagulat wird mit Wasser gewaschen und 60 °C getrocknet.

B 2) In einem Reaktor werden vorgelegt: 810 g Wasser und 2189 g eines Acrylatkautschuklatex mit Kern/Mantel-Struktur nach der DE-OS 3 200 070 mit einem Feststoffgehalt von 37 Gew.-% und einem mittleren Teilchendurchmesser ($d_{50}$) von 480 nm. Es wird 15 min. mit Stickstoff gespült. nach Aufheizen auf 75 °C wird unter leichtem Stickstoffstrom eine Lösung aus 8 g Kaliumperoxodisulfat in 200 g Wasser zugegeben. Danach werden folgende Lösungen gleichzeitig innerhalb von 6 Stunden bei 75 °C in den Reaktor eingespeist:

| | |
|---|---|
| Lösung 1: | 1191 g $\alpha$-Methylstyrol |
| | 586 g Acrylnitril |
| | 113 g tert.-Butylacrylat |
| Lösung 2: | 30 g $C_{14}$-$C_{18}$-Alkylsulfonsäuren-Na-Salz |
| | 2600 g Wasser |

Man läßt sechs Stunden bei 75 °C auspolymerisieren, fügt 1 Gew.-% (bezogen auf den Feststoff) eines phenolischen Stabilisators zu und stellt den Latex mit 0,5n Natronlauge auf pH 9. Der Latex wird mit einer wäßrigen Magnesiumsulfatlösung koaguliert, das Polymerisat mit Wasser gewaschen und bei 60 °C getrocknet.

B 3) Man verfährt wie in beispiel B 1), wobei als Lösung 1 folgende Lösung zudosiert wird:

| | |
|---|---|
| Lösung 1: | 1279 g Styrol |
| | 497 g Acrylnitril |
| | 113 g tert.-Butylacrylat |

B 4) Man verfährt wie in Beispiel B 1), wobei im Reaktor 1700 g Wasser und 1912 g des Polybutadienlatex vorgelegt werden. Als Lösungen 1 und 2 werden folgende Lösung in den Reaktor eingespeist:

| | |
|---|---|
| Lösung 1: | 1238 g Styrol |
| | 481 g Acrylnitril |
| | 66,35 g tert.-Butylacrylat |
| Lösung 2: | 40 g disproportionierte Abietinsäure-Na-Salz |

34 g 1n Natronlauge
2200 g Wasser

B 5) Man verfährt wie in Beispiel B 1), wobei im Reaktor 1701 g Wasser und 3438 g des Polybutadienlatex vorgelegt werden. Als Lösung 1 und 2 werden bei 70 °C folgende Lösungen innerhalb von 4 h in den Reaktor eingespeist.

Lösung 1: 938 g Styrol
365 g Acrylnitril
47,25 g tert.-Butylacrylat

Lösung 2: 44 g disproportionierte Abietinsäure-Na-Salz
36 g 1n Natronlauge
1400 g Wasser

C) Pfropfkautschuke

C 1) Man verfährt wie in Beispiel B 1). Als Lösung 1 wird folgende Lösung zudosiert.

Lösung 1: 1361 g Styrol
529 g Acrylnitril

C 2) Pfropfpolymerisat aus einer vernetzten Polybutadienkautschukgrundlage einer mittleren Teilchengröße ($d_{50}$) von 360 nm und einer Pfropfhülle aus Styrol-Acrylnitril im Gewichtsverhältnis 72/28 und einem Kautschukgehalt von 55 Gew.-%.

D) Thermoplastisches Harzpolymer

Styrol-Acrylnitril-Harz mit 28 Gew.-Acrylnitril und einem Massenmittelwert der Molmasse von 110.000 g/mol hergestellt durch kontinuierliche Massepolymerisation.

E) Thermoplastisches Harzcopolymer mit t-Butylacrylat

Terpolymerisat aus Styrol-Acrylnitril-tert.-Butylacrylat (67,7/26,3/6 Gew.-%) mit einem Massenmittelwert der Molmasse von 90.000 g/mol, hergestellt durch radikalische Emulsionspolymerisation in Wasser.

<u>Herstellung und Prüfung der Formmassen</u>

Allgemeine Vorschrift:

Auf einem kontinuierlich arbeitenden Doppelwellenextruder wird die Polyamidkmomponente A) aufgeschmolzen und zu deren Schmelze die Komponente B) sowie gegebenenfalls C), D) und E) zudosiert und in der Schmelze homogenisiert. Die Massetemperaturen betragen dabei 275 °C. Der Schmelzstrang wird vor dem Austritt aus der Düse entgast, in Wasser abgeleitet, granuliert und getrocknet.

Von den Formmassen werden auf einer üblichen Spritzgußmaschine 80 x 10 x 4 mm Prüfstäbe sowie Normkleinstäbe hergestellt. An den 80 x 10 x 4 mm Prüfstäben wird der Biege-E-Modul (DIN 53 457) bei RT und 80 °C, die Schlagzähigkeit bzw. Kerbschlagzähigkeit nach Izod (ISO 180) bei RT und -20 °C geprüft. Die Fließnahtfestigkeit wird durch Schlagbiegeversuch nach Charpy (ISO/R 179) bei RT an Normkleinstäben ermittelt.

Die Wasseraufnahme wird nach zweiunddreißigstündiger Lagerung im Tropenklima (40 °C, 95 % rel. Luftfeuchte) gravimetrisch ermittelt.

**Tabelle 1** Zusammensetzung der Formmassen

| Beispiel | Zusammensetzung | | | | | | | | | |
|---|---|---|---|---|---|---|---|---|---|---|
| | A | B1 | B2 | B3 | B4 | B5 | C1 | C2 | D | E |
| 1* | 60 | -- | -- | -- | -- | -- | 40 | -- | -- | -- |
| 2* | 50 | -- | -- | -- | -- | -- | 35 | 15 | -- | -- |
| 3* | 50 | -- | -- | -- | -- | -- | -- | 25 | 20 | 5 |
| 4 | 60 | 40 | -- | -- | -- | -- | -- | -- | -- | -- |
| 5 | 60 | -- | 40 | -- | -- | -- | -- | -- | -- | -- |
| 6 | 50 | 40 | -- | -- | -- | -- | -- | 10 | -- | -- |
| 7 | 50 | 45 | -- | -- | -- | -- | -- | 5 | -- | -- |
| 8 | 50 | -- | -- | 35 | -- | -- | -- | 15 | -- | -- |
| 9 | 50 | -- | -- | -- | 50 | -- | -- | -- | -- | -- |
| 10 | 50 | -- | -- | -- | -- | 35 | -- | -- | 15 | -- |

*: Vergleichsversuche

**Tabelle 2** Eigenschaften der Formmassen

| Bei-spiel | Schlagzähigkeit [kJ/m²] +20° C | Schlagzähigkeit [kJ/m²] -20° C | Kerbschlagzähigkeit [kJ/m²] +20° C | Kerbschlagzähigkeit [kJ/m²] -20° | Biege-E-Modul [MPa] +20° C | Biege-E-Modul [MPa] +80° C | ZFLNF [kJ/m²] | Wasser-nahme [%] | Gesamt-kau-tschuk-gehalt [%] |
|---|---|---|---|---|---|---|---|---|---|
| 1* | 63 | 64 | 9 | 8 | 2117 | 750 | 2 | 1,8 | 12,0 |
| 2* | 74 | 59 | 9 | 8 | 1993 | 660 | 2 | 2,1 | 18,75 |
| 3* | n.g. | 7xn.g. | 23 | 19 | 2030 | - | 6 | 1,5 | 13,75 |
| 4 | 9xn.g. | 9xn.g. | 71 | 27 | 2360 | 780 | 3xn.g. | 1,9 | 12,0 |
| 5 | 4xn.g. | 135 | 18 | 13 | 2145 | 710 | 8 | 1,9 | 12,0 |
| 6 | n.g. | n.g. | 71 | 34 | 1820 | 680 | 6xn.g. | 1,7 | 17,5 |
| 7 | n.g. | n.g. | 70 | 34 | 1870 | 680 | 52 | 1,6 | 16,25 |
| 8 | n.g. | n.g. | 81 | 30 | 1846 | 570 | 55 | 1,7 | 18,25 |
| 9 | n.g. | n.g. | 43 | 33 | 1870 | 620 | 52 | 1,8 | 17,0 |
| 10 | n.g. | 6xn.g. | 23 | 15 | 2010 | 690 | 11 | 1,8 | 19,25 |

ZFLNF: Zusammenfließnahtfestigkeit
*: Vergleichsversuche
-: nicht bestimmt

## Patentansprüche

**1.** Thermoplastische Formmassen enthaltend
A) 35 - 97 Gew.-% eines thermoplastischen Polyamids A)

B) 3 - 65 Gew.-% eines Pfropfpolymerisates B) mit einer Pfropfhülle B 1) aus
B 1.1) Wenigstens einem Monomer aus der Reihe der Styrole, α-Methylstyrole, Acrylnitril
und
B 1.2) Wenigstens einem Ester der (Meth)acrylsäure mit tert. C4-C10-Alkoholen in Mengen von 1 bis 12 Gew.-% in der Pfropfhülle B 1)
gepfropft auf eine teilchenförmige Kautschukgrundlage B 2) mit einer Glastemperatur < 0° C, wobei das Pfropfpolymerisat B) einen Kautschukgehalt von 5 bis 60 Gew.-% besitzt
und
C) 0 - 45 Gew.-% eines Kautschukpolymerisates als Schlagzähmodifikator mit einem Kautschukgehalt ≧ 55 Gew.-%, mit der Maßgabe, daß der Kautschukanteil der Komponente C mindestens 10 Gew.-% höher als der Kautschukanteil der Komponente B) liegt.

## Claims

**1.** Thermoplastic moulding compounds containing
A) 35 to 97% by weight of a thermoplastic polyamide A)
B) 3 to 65% by weight of a graft polymer B) with a graft shell B1) of
B 1.1) at least one monomer from the series of styrenes, α-methyl styrenes, acrylonitrile and
B 1.2) at least one ester of (meth)acrylic acid with tert. $C_{4-10}$ alcohols in quantities of 1 to 12% by weight in the graft shell B1)
grafted onto a particulate rubber base B 2) with a glass temperature of < 0°C,
the graft polymer B) having a rubber content of 5 to 60% by weight,
and
C) 0 to 45% by weight of a rubber polymer with a rubber content of ≧ 55% by weight as impact modifier, with the proviso that the rubber content of component C is at least 10% by weight higher than the rubber content of component B).

## Revendications

**1.** Matières moulables thermoplastiques contenant
A) 35-97% en poids d'un polyamide thermoplastique A)
B) 3-65% en poids d'un polymère greffé B) muni d'une enveloppe de greffage B1) constituée par
B 1.1) au moins un monomère de la série des styrènes, des α-méthylstyrènes, de l'acrylonitrile
et
B 1.2) au moins un ester d'acide (méth)acrylique avec des alcools tertiaires en $C_4$-$C_{10}$ dans des quantités de 1 à 12% en poids dans l'enveloppe de greffage B 1),
greffée sur un substrat particulaire de caoutchouc B 2) ayant une température de transition vitreuse < 0°C,
le polymère greffé B) possédant une teneur en caoutchouc de 5 à 60% en poids
et
C) 0-45% en poids d'un polymère de caoutchouc comme modificateur de la résilience, ayant une teneur en caoutchouc ≧ 55% en poids, avec cette mesure que la fraction en caoutchouc du composant C est d'au moins 10% en poids supérieure à la fraction en caoutchouc du composant B).